# EUROPÄISCHE PATENTSCHRIFT

(11) **EP 3 963 509 B1**
(45) Veröffentlichungstag und Bekanntmachung des Hinweises auf die Patenterteilung: **06.09.2023**
(21) Anmeldenummer: 20743681.7
(22) Anmeldetag: 21.07.2020
(51) Int. Cl.: G06K 17/00, G06K 13/073, G06K 7/10

(54) **VORRICHTUNG ZUM PERSONALISIEREN VON RFID CHIPS**
DEVICE FOR PERSONALIZING RFID CHIPS
DISPOSITIF DE PERSONNALISATION DE PUCES RFID

(30) Priorität: 31.07.2019 DE 202019104199 U
(43) Veröffentlichungstag der Anmeldung: 09.03.2022
(73) Patentinhaber: Feldbaum + Vogt GmbH, 32791 Lage NRW (DE)
(72) Erfinder: FELDBAUM, Rainer, 32791 Lage NRW (DE); RUDEL, Eugen, 32657 Lemgo NRW (DE)
(74) Vertreter: Ter Meer Steinmeister & Partner
(86) Internationale Anmeldenummer: PCT/EP2020/070522
(87) Internationale Veröffentlichungsnummer: WO 2021/018665

(56) Entgegenhaltungen:
- US-A1- 2018 341 243

## Beschreibung

Die Erfindung betrifft eine Vorrichtung zum Personalisieren von RFID Chips für Etiketten, die an zu identifizierenden Objekten anzubringen sind, mit einem Lese/Schreibkopf, der dazu konfiguriert ist, wenn er sich in der Nähe eines Chips befindet, drahtlos mit diesem Chip zu kommunizieren, wobei eine Transporteinrichtung dazu ausgebildet ist, die Chips nacheinander und fortlaufend durch eine Personalisierungsstation zu transportieren, und der Lese/Schreibkopf beweglich in der Personalisierungsstation angeordnet und derart antreibbar ist, dass er sich während der Kommunikation mit einem Chip über eine gewisse Strecke synchron mit dem Chip mitbewegt.

RFID Chips dienen zur drahtlosen Identifizierung von Objekten mittels Radiowellen (Radio Frequency IDentification). Bei den Objekten kann es sich beispielsweise um Waren in einem Verkaufsraum handeln. Mit Hilfe von an den Ausgängen des Verkaufsraumes angebrachten Lese/Schreibköpfen lässt sich dann überprüfen, ob jemand versucht, die Waren aus dem Verkaufsraum herauszuschmuggeln ohne zu bezahlen. Mit Hilfe von Lese/Schreibköpfen, die an den Kassen angeordnet sind, lassen sich die Objekte im Warenkorb eines Kunden identifizieren, so dass die Waren automatisch gebucht werden können. Gleichzeitig wird an den Chip die Information übermittelt, dass die Ware gebucht und bezahlt wurde, so dass die Auslösung eines Alarms unterdrückt wird, wenn der Kunde mit den Waren den Verkaufsraum verlässt.

Bei den RFID Chips handelt es sich zumeist um passive Chips, die keine eigene Batterie aufweisen, sondern ihre Betriebsenergie aus dem vom Lese/Schreibkopf gesendeten und von einer Antenne auf dem Chip empfangenen Radiosignal beziehen. Jeder Chip enthält einen elektronischen Speicher, in dem mit Hilfe des Lese/Schreibkopfes Daten eingeschrieben und wieder ausgelesen werden können. Im Zustand unmittelbar nach der Herstellung enthalten die Chips noch keine gespeicherten Daten, allenfalls abgesehen von einer bereits bei der Herstellung einprogrammierten Chip-Kennung. Wenn die Chips auf oder in den Etiketten angebracht werden, die später an den Waren angebracht werden, so wird in einem Vorgang, der als "Personalisierung" bezeichnet wird, in jeden Chip die Information eingeschrieben, die das Objekt kennzeichnet, auf dem das Etikett angebracht werden soll. Im Prinzip können dazu Lese/Schreibköpfe von der gleichen Art eingesetzt werden, wie sie auch in den Verkaufsräumen installiert sind.

Eine Personalisierungsvorrichtung der oben genannten Art ist aus US 2018341243 A1 bekannt.

Aufgabe der Erfindung ist es, eine Vorrichtung zum Personalisieren von RFID Chips zu schaffen, die einen kompakten Aufbau aufweist und eine hohe Produktivität ermöglicht.

Diese Aufgabe wird dadurch gelöst, dass die Personalisierungsstation mindestens zwei Sektionen aufweist, die jeweils mindestens einen Lese/Schreibkopf aufweisen und nacheinander von den Chips durchlaufen werden, und dass eine Steuereinrichtung dazu ausgebildet ist, die Bewegung der Lese/Schreibköpfe so zu steuern, dass in der Folge der Chips je zwei Chips, die in der einen Sektion personalisiert wurden, durch Lücken getrennt sind, und die Chips in diesen Lücken in einer anderen Sektion personalisiert werden..

Der für die Personalisierung eines Chips erforderliche Datenaustausch erfordert eine gewisse Zeit, innerhalb derer sich der Chip im Empfangsbereich des Lese/Schreibkopfes befinden muss. Wenn mehrere Chips in dichter Folge durch die Personalisierungsstation transportiert werden, so besteht die Gefahr, dass es durch Übersprechen oder Interferenz zu Störungen in der drahtlosen Kommunikation kommt. Die Erfindung löst dieses Problem dadurch, dass der Lese/Schreibkopf während des Datenaustausches mit dem Chip mitbewegt wird. Das ermöglicht es, den Abstand zwischen Lese/Schreibkopf und Chip zu verringern, so dass entsprechend auch die Reichweite der drahtlosen Kommunikation verringert werden kann, indem die Intensität der ausgetauschten Radiosignale reduziert wird. Das erlaubt es, die Chips in dichter Folge zuzuführen, ohne dass es zu einem Übersprechen kommt. Bei gegebener Transportgeschwindigkeit lässt sich so ein höherer Durchsatz erreichen. Eine weitere Steigerung des Durchsatzes wird dadurch ermöglicht, dass auch die Transportgeschwindigkeit erhöht werden kann, da sich der Lese/Schreibkopf mit dem Chip mitbewegt und somit trotz der hohen Geschwindigkeit der Chips länger im Sende- und Empfangsbereich des Lese/Schreibkopfes bleibt.

Da in der erfindungsgemäßen Personalisierungsstation die Reichweite des Lese/Schreibkopfes deutlich geringer ist als die Reichweite, die bei den Lese/Schreibköpfen im Verkaufsraum erforderlich ist, damit die Waren sicher erfasst werden können, können in der Personalisierungsstation auch mehrere Lese/Schreibköpfe in geringem Abstand zueinander installiert werden, ohne dass es zu Interferenzen oder Übersprechen kommt. Auf diese Weise wird eine weiter erhöhte Effizienz bei kompaktem Aufbau der Personalisierungsstation ermöglicht.

Gemäß einem weiteren Merkmal der Erfindung ist die Personalisierungsstation in mehrere Sektionen unterteilt, die in Transportrichtung aufeinanderfolgen und jeweils mindestens einen Lese/Schreibkopf enthalten. Die Bewegungsabläufe werden so gesteuert, dass der Lese/Schreibkopf in der ersten Personalisierungsstation beispielsweise nur jeden zweiten, jeden dritten, etc. Chip bearbeitet und die Lücken in der Folge der Chips dann in den nachfolgenden Sektionen aufgefüllt werden. Das hat den Vorteil, dass ein größerer Abstand zwischen den Lese/Schreibköpfen erreicht wird und somit die Gefahr von Interferenzen verringert wird.

Vorteilhafte Ausgestaltungen und Weiterbildungen der Erfindung sind in den Unteransprüchen angegeben.

Die Transporteinrichtung kann eine über Leitrollen geführte endlose Bahn aufweisen, auf der die Chips nacheinander zu der Personalisierungsstation zugeführt werden. Wenn die Chips bereits auf oder in den Etiketten angebracht sind, kann die endlose Bahn ein Trägerband sein, dass die beispielsweise als Klebeetiketten ausgebildeten Etiketten trägt. Umgekehrt kann die endlose Bahn auch durch das Material der Etiketten selbst gebildet werden, das dann erst in einem späteren Schritt in die einzelnen Etiketten aufgeteilt wird.

Die Transporteinrichtung kann so ausgebildet sein, dass die Chips linear durch die Personalisierungsstation bewegt werden. Der Lese/Schreibkopf bewegt sich dann oszillierend parallel zur Transportrichtung, so dass er sich in einem Vorwärtstakt mit dem Chip mitbewegt und sich in einem Rückwärtstakt (ggf. mit erhöhter Geschwindigkeit) wieder entgegen der Transportrichtung zurückbewegt, um dann den nächsten Chip zu bearbeiten. Wahlweise können auch mehrere Lese/Schreibköpfe auf einem gemeinsamen Wagen installiert werden, der sich oszillierend bewegt, so dass in jedem Zyklus mehrere Chips personalisiert werden.

Um einen kompakten Aufbau der Vorrichtung zu ermöglichen, können zwei Sektionen der Personalisierungsstation und die zugehörigen Sektionen der Transporteinrichtung auch parallel zueinander angeordnet sein, wobei die Transportrichtungen der Chips in den Sektionen einander entgegengesetzt sind. Im Fall von drei oder mehr Sektionen können diese Sektionen so angeordnet sein, dass sich die Chips mäanderförmig durch die aufeinanderfolgenden Sektionen bewegen.

In einer anderen Ausführungsform können die Lese/Schreibköpfe auch so angeordnet und angetrieben sein, dass sie sich nicht oszillierend und linear bewegen, sondern unidirektional auf einer geschlossenen Bahn, die die Form eines Kreises oder eines Polygons haben kann. Dadurch werden häufige Richtungswechsel der Wagen bzw. der Lese/Schreibköpfe vermieden, so dass sich mit vergleichsweise geringer Antriebskraft der Antriebe eine hohe Taktrate erreichen lässt.

Inhalt dieser Anmeldung ist auch ein Verfahren zum Personalisieren von RFID Chips für Etiketten, die an zu identifizierenden Objekten anzubringen sind, bei welchem Verfahren ein Lese/Schreibkopf, wenn er sich in der Nähe eines Chips befindet, drahtlos mit diesem Chip kommuniziert, dadurch gekennzeichnet, dass die Chips nacheinander und fortlaufend durch eine Personalisierungsstation transportiert werden, in der der Lese/Schreibkopf derart angetrieben wird, dass er sich während der Kommunikation mit einem Chip über eine gewisse Strecke synchron mit diesem Chip mitbewegt.

Im folgenden werden Ausführungsbeispiele anhand der Zeichnung näher erläutert.

Es zeigen:
- Fig. 1: eine Prinzipskizze einer erfindungsgemäßen Vorrichtung;
- Fig. 2: die Vorrichtung nach Fig. 1 in einer anderen Phase ihres Betriebszyklus; und
- Fig. 3 und 4: Prinzipskizzen von Vorrichtungen gemäß abgewandelten Ausführungsformen der Erfindung.

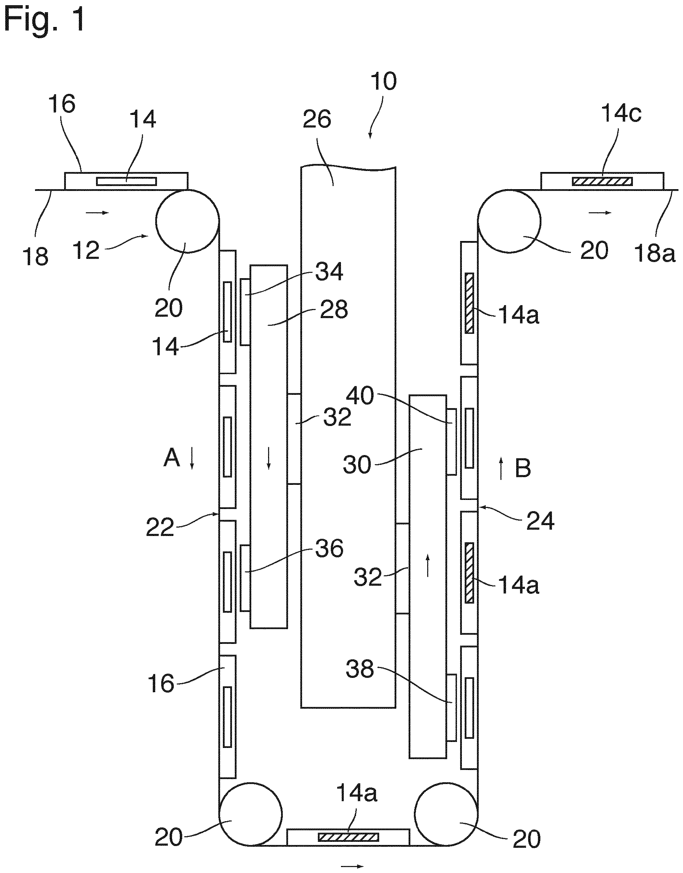

Die in Fig. 1 gezeigte Vorrichtung weist eine Personalisierungsstation 10 und eine Transporteinrichtung 12 auf, mit der RFID Chips 14 nacheinander durch die Personalisierungsstation 10 transportiert werden. Im gezeigten Beispiel wird angenommen, dass die Chips 14 bereits in einer vorausgegangenen Bearbeitungsstufe in Klebeetiketten 16 einlaminiert wurden, die sich auf einem endlosen Trägerband 18 befinden.

Das Trägerband 18 läuft über Umlenkrollen 20, die so angeordnet sind, dass sich die Chips 14 in einer ersten Sektion 22 der Personalisierungsstation 10 abwärts in Richtung des Pfeils A und in einer zweiten Sektion 24 aufwärts in Richtung des Pfeils B bewegen. Aus Gründen der Deutlichkeit ist die Dicke der Etiketten 16 und der Chips 14 in der Zeichnung übertrieben dargestellt. In der Praxis sind die Etiketten 16 so dünn und flexibel, dass sie der Krümmung des Trägerbandes an den Umlenkrollen 20 folgen können. Außerdem sind die Etiketten 16 in der Praxis in gleichmäßigen Abständen angeordnet, was in der vereinfachten zeichnerischen Darstellung in Fig. 1 nur für die Etiketten in den Sektionen 22 und 24 gilt.

Die Personalisierungsstation 10 weist einen Träger 26 auf, der sich von oben vertikal in den Zwischenraum zwischen den Sektionen 22 und 24 erstreckt und an dem zwei Wagen 28, 30, die jeweils den Chips in einer der Sektionen 22, 24 zugewandt sind, mittels Linearantrieben 32 vertikalbeweglich geführt und oszillierend angetrieben sind. Der Wagen 28 trägt zwei Lese/Schreibköpfe 34, 36, und der Wagen 30 trägt zwei Lese/Schreibköpfe 38, 40. Dabei ist es für die Lehre der Erfindung unerheblich, ob die "Lese/Schreibköpfe" sowohl eine Lesefunktion als auch eine Schreibfunktion haben oder nur eine Lesefunktion oder nur eine Schreibfunktion.

Der Abstand zwischen den Lese/Schreibköpfen 34 und 36 beträgt im gezeigten Beispiel das 2-fache des Abstands zwischen zwei aufeinanderfolgenden Etiketten 16. Dasselbe gilt auch für den Abstand zwischen den Lese/Schreibköpfen 38 und 40.

In dem in Fig. 1 gezeigten Zustand hat der Wagen 28 gerade seinen oberen Totpunkt verlassen und bewegt sich mit einer Geschwindigkeit, die mit der Transportgeschwindigkeit des Trägerbandes 18 übereinstimmt, nach unten, so dass sich die Lese/Schreibköpfe 34, 36 synchron mit zwei Chips 14 bewegen, die ihnen unmittelbar gegenüberliegen. Diese Lese/Schreibköpfe haben gerade damit begonnen, die ihnen gegenüberliegenden Chips 14 zu personalisieren.

Der Wagen 30 in der Sektion 24 hat gerade seinen unteren Totpunkt verlassen und bewegt sich nach oben, ebenfalls mit der gleichen Geschwindigkeit wie das Trägerband 18 in der Sektion 24. Seine Lese/Schreibköpfe 38 und 24 haben ebenfalls gerade damit begonnen, zwei Chips 14 zu personalisieren, die ihnen gegenüberliegen.

In zwei vorausgegangenen Arbeitszyklen der Personalisierungsstation 10 sind mit den Lese/Schreibköpfen 34 und 36 bereits vier Chips personalisiert worden, von denen in Fig. 1 nur drei sichtbar und mit 14a bezeichnet sind. Diese Chips sind durch Lücken voneinander getrennt, in denen sich noch nicht personalisierte Chips befinden.

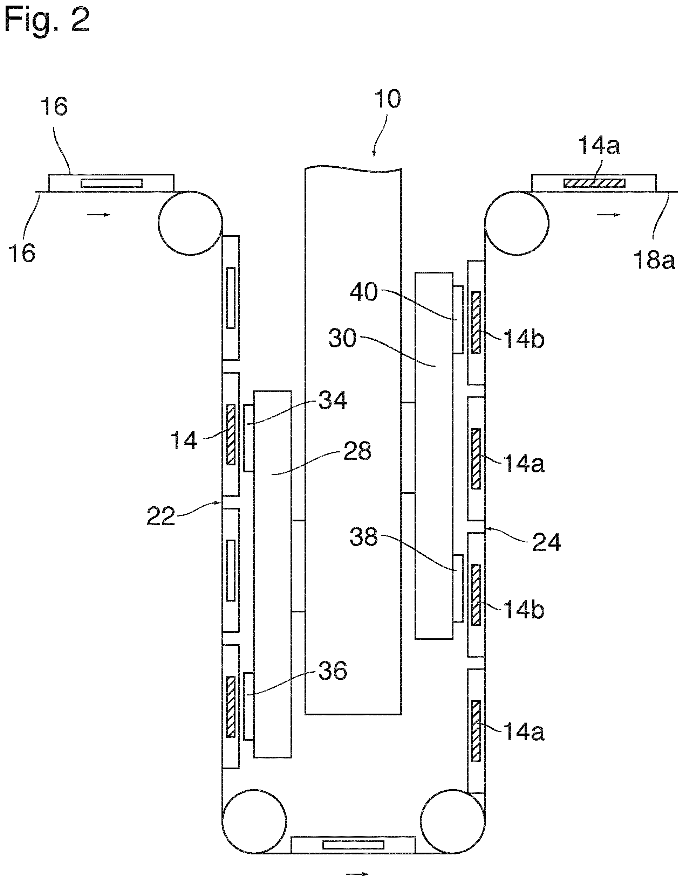

Fig. 2 zeigt die Vorrichtung in einem etwas späteren Stadium, in dem der Wagen 28 seinen unteren Totpunkt erreicht hat. Sämtliche Etiketten 16 haben sich längs ihrer Transportbahn um einen Etikettenabstand weiter bewegt. Die Lese/Schreibköpfe 34, 36 haben die Personalisierung der beiden ihnen gegenüberliegenden Chips 14 abgeschlossen, weshalb diese Chips nun ebenso wie die Chips 14a schraffiert dargestellt sind.

Der Wagen 30 hat seinen oberen Totpunkt erreicht, und die Lese/Schreibköpfe 38 und 40 haben zwei weitere Chips 14b personalisiert, die in den Lücken zwischen den Chips 14a lagen.

Auf einem Abschnitt 18a des Trägerbandes stromabwärts der Personalisierungsstation 10 befindet sich deshalb eine lückenlose Folge von Etiketten mit personalisierten Chips.

Nach dem in Fig. 2 dargestellten Zeitpunkt bewegen sich die Wagen 28 und 30 (in diesem Beispiel mit dem Betrage nach der gleichen Geschwindigkeit wie das Transportband 18) in ihre jeweilige Ausgangslage zurück, während sich die Etiketten 16 um einen weiteren Etikettenabstand weiterbewegen, so dass wieder ein Zustand erreicht wird, der dem in Fig. 1 dargestellten Zustand entspricht. In Fig. 1 ist auf dem stromabwärtigen Abschnitt 18a des Trägerbandes ein Chip 14c gezeigt, der bereits im vorangegangenen Arbeitszyklus der Personalisierungsstation mit dem Lese/Schreibkopf 40 personalisiert worden ist.

Die Bewegungen der beiden Wagen 28 und 30 werden durch eine programmierbare Steuereinrichtung elektronisch gesteuert. Die Hublänge und die Geschwindigkeit können durch einfache Umprogrammierung an geänderte Transportgeschwindigkeiten des Trägerbandes und an geänderte Etikettenabstände angepasst werden. Auch die Positionen der Lese/Schreibköpfe an den Wagen 28, 30 sind in der Vertikalen verstellbar, so dass sie an den jeweiligen Etikettenabstand angepasst werden können. Die Vorrichtung lässt sich auf diese Weise je nach Anwendungsfall so programmieren, dass für jeden Chip eine ausreichende Zeit zur Personalisierung zur Verfügung steht und alle Chips mit hoher Effizienz personalisiert werden können.

Das beschriebene Ausführungsbeispiel lässt sich auf vielfältige Weise abwandeln. Beispielsweise können sich an die Sektion 24 stromabwärts weitere Sektionen anschließen, die von dem Trägerband 18 mäanderförmig durchlaufen werden. Wenn beispielsweise insgesamt drei Sektionen vorhanden sind, werden die Lese/Schreibköpfe so angeordnet, dass ihr vertikaler Abstand drei Etikettenlängen entspricht, so dass nach dem Durchlaufen der ersten Sektion 22 jeweils zwei noch nicht personalisierte Chips zwischen den personalisierten Chips liegen. Von diesen beiden Chips wird dann einer in der Sektion 24 und der nächste in der nachfolgenden Sektion personalisiert. Dieses Prinzip lässt sich problemlos auf Personalisierungsstationen mit vier oder mehr Sektionen verallgemeinern.

Umgekehrt ist es möglich, auf einem gemeinsamen Wagen mehr als zwei Lese/Schreibköpfe anzuordnen. Wenn beispielsweise jeder der Wagen 28, 30 mit drei Lese/Schreibköpfe bestückt ist, werden in jedem Abwärtstakt des Wagens 28 drei aufeinanderfolgende Chips personalisiert. Während sich dieser Wagen aufwärts in die Ausgangsposition zurückbewegt, werden drei nachfolgende Chips ausgelassen, die dann später mit dem Wagen 40 personalisiert werden.

Es sind auch Ausführungsformen denkbar, bei denen jeder Wagen nur mit einem einzigen Lese/Schreibkopf bestückt ist. Die Lücke zwischen den Chips, die mit demselben Lese/Schreibkopf personalisiert werden, lässt sich dann wahlweise dadurch verkleinern, dass die Geschwindigkeit beim Rücklauf des Wagens gegenüber der Geschwindigkeit beim Vorlauf (synchron mit den Chips) erhöht wird.

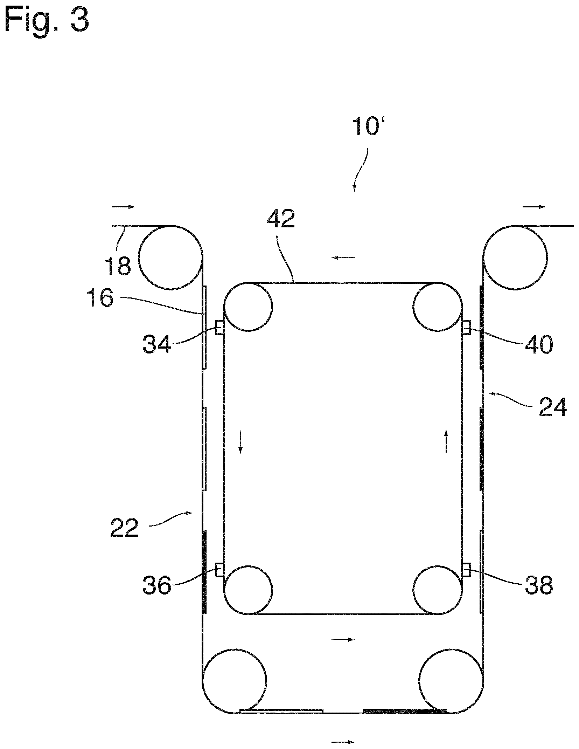

Fig. 3 zeigt eine Personalisierungsstation 10', bei der die Lese/Schreibköpfe 34, 36, 38, 40 auf einem endlosen Förderband 42 zwischen den beiden Sektionen 22, 24 umlaufen, so dass die Bewegungsrichtung nicht umgekehrt zu werden braucht. Der Lese/Schreibkopf 34 beginnt gerade damit, den Chip auf einem der Etiketten 16 zu personalisieren, während der Lese/Schreibkopf 36 den Personalisierungsvorgang gerade abgeschlossen hat. Das wird hier dadurch symbolisiert, dass das zugehörige Etikett schwarz gefüllt ist. Auch bei dieser Vorrichtung ist stromabwärts der ersten Sektion 22 nur jeder zweite Chip personalisiert. Die vier Lese/Schreibköpfe sind in gleichen Abständen längs des Förderbandes 42 angeordnet. Das Förderband 42 läuft mit der gleichen Geschwindigkeit wie das Trägerband 18. Der vom Trägerband 18 zurückzulegende Weg zwischen den Sektionen 22 und 24 ist jedoch länger als bei dem Förderband 42, weshalb die Lese/Schreibköpfe beim Übergang von der ersten Sektion 22 auf die zweite Sektion 24 um einen Etikettenabstand "aufholen", so dass in der Sektion 24 dann die verbliebenen Lücken aufgefüllt werden.

Auch das Prinzip dieser Vorrichtung lässt sich auf Varianten mit drei oder mehr Sektionen sowie auf Varianten mit einer anderen Anzahl von Lese/Schreibköpfen auf dem Förderband 42 verallgemeinern.

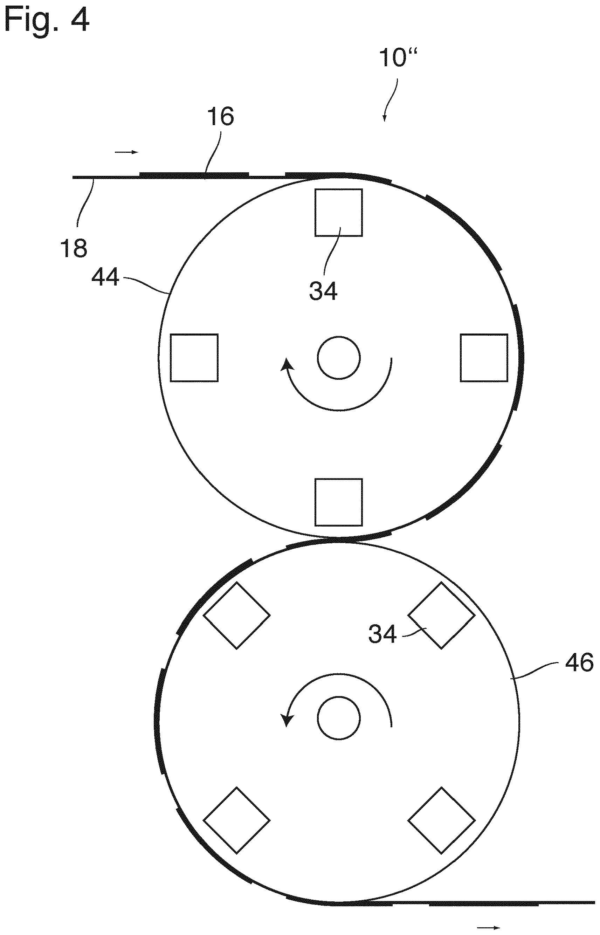

Fig. 4 zeigt als weiteres Beispiel eine Personalisierungsstation 10", bei der insgesamt acht Lese/Schreibköpfe 34 auf zwei gegensinnig rotierenden Trommeln 44, 46 verteilt sind, die von dem Trägerband 18 umschlungen werden. Die Drehzahl der Trommeln 44, 46 ist so an die zum Personalisieren der Chips benötigte Zeit angepasst, dass ein einzelner Chip während einer halben Trommeldrehung personalisiert werden kann. Während das Trägerband 18 um die Trommel 44 umläuft, wird jeder zweite Chip personalisiert. Während des Umlaufs des Trägerbandes um die Trommel 46 werden dann die verbleibenden Chips personalisiert.

Auch bei dieser Ausführungsform kann die Anzahl der Trommeln sowie die Anzahl der Lese/Schreibköpfe je Trommel variiert werden.

## Patentansprüche

1. Vorrichtung zum Personalisieren von RFID Chips (14) für Etiketten (16), die an zu identifizierenden Objekten anzubringen sind, mit einem Lese/Schreibkopf (34, 36, 38, 40), der dazu konfiguriert ist, wenn er sich in der Nähe eines Chips (14) befindet, drahtlos mit diesem Chip zu kommunizieren, wobei eine Transporteinrichtung (12) dazu ausgebildet ist, die Chips (16) nacheinander und fortlaufend durch eine Personalisierungsstation (10; 10'; 10") zu transportieren, und der Lese/Schreibkopf (34, 36, 38, 40) beweglich in der Personalisierungsstation angeordnet und derart antreibbar ist, dass er sich während der Kommunikation mit einem Chip über eine gewisse Strecke synchron mit dem Chip mitbewegt, **dadurch gekennzeichnet, dass** die Personalisierungsstation mindestens zwei Sektionen (22, 24) aufweist, die jeweils mindestens einen Lese/Schreibkopf (34, 36, 38, 40) aufweisen und nacheinander von den Chips (14) durchlaufen werden, und dass eine Steuereinrichtung dazu ausgebildet ist, die Bewegung der Lese/Schreibköpfe so zu steuern, dass in der Folge der Chips (14) je zwei Chips, die in der einen Sektion personalisiert wurden, durch Lücken getrennt sind, und die Chips in diesen Lücken in einer anderen Sektion personalisiert werden.

2. Vorrichtung nach Anspruch 1, bei der die Transporteinrichtung (12) ein endloses Trägerband (18), auf dem die Chips (14) der Reihe nach angeordnet sind, sowie Umlenkrollen (20) aufweist, über welche das Trägerband (18) durch die Personalisierungsstation (10; 10'; 10") geführt ist.

3. Vorrichtung nach Anspruch 1 oder 2, mit einem Linearantrieb (32), der den Lese/Schreibkopf (34, 36, 38, 40) zu einer oszillierenden linearen Bewegung antreibt.

4. Vorrichtung nach Anspruch 1 oder 2, bei der der Lese/Schreibkopf (34, 36, 38, 40) zu einer Umlaufbewegung längs einer Bahn antreibbar ist, die zumindest abschnittsweise parallel zu der Bewegungsbahn der Chips (14) verläuft.

5. Vorrichtung nach einem der vorstehenden Ansprüche, bei der die Transportbahnen der Chips in zwei aufeinanderfolgenden Sektionen (22, 44) geradlinig und zueinander parallel sind und die Transportrichtungen in diesen Sektionen einander entgegengesetzt sind.

6. Vorrichtung nach einem der vorstehenden Ansprüche, bei der mehrere Lese/Schreibköpfe (34, 36, 38, 40) auf einem gemeinsamen Wagen (28, 32) in der Transportrichtung in Abstand zueinander angeordnet sind und der Wagen so antreibbar ist, dass sich die Lese/Schreibköpfe (34, 36, 38, 40) synchron mit den Chips (14) mitbewegen.

7. Vorrichtung nach Anspruch 6, bei der die Abstände der Lese/Schreibköpfe (34, 36, 38, 40) auf dem Wagen (28, 30) verstellbar sind.

## Claims

1. A device for personalizing RFID chips (14) for labels that are to be attached to objects to be identified, the device comprising a read/write head (34, 36, 38, 40) that is configured for wireless communication with a chip (14) when located in the vicinity of the chip, wherein a transport device (12) is configured for conveying the chips (14) successively and continuously through a personalizing station (10; 10'; 10"), and the read/write head (34, 36, 38, 40) is moveably arranged in the personalizing station and adapted to be driven such that, while communicating with a chip, it moves a certain distance synchronously with the chip, **characterized in that** the personalizing station has at least two sections (22, 24) each of which comprises at least one read/write head (34, 36, 38, 40), and the chips (14) pass successively through the sections, and **in that** a controller is configured for controlling the movement of the read/write heads such that, in the sequence of the chips (14), every pair of chips that have been personalized in the one section are separated by gaps, and the chips contained in these gaps are personalized in the other section.

2. The device according to claim 1, wherein the transport device (12) comprises an endless carrier belt (18) on which the chips (14) are aligned in a row, and the transport device further comprises deflection rollers (20) over which the carrier belt (18) is trained through the personalizing station (10; 10'; 10").

3. The device according to claim 1 or 2, comprising a linear drive (32) driving the read/write head (34, 36, 38, 40) to perform an oscillating linear movement.

4. The device according to claim 1 or 2, wherein the read/write head (34, 36, 38, 40) is adapted to be driven to revolve along a trajectory that extends at least in certain sections parallel to the path of movement of the chips (14).

5. The device according any of the preceding claims, wherein the paths of movement of the chips in two successive sections (22, 24) are straight and parallel to one another and the directions of movement in these sections are opposite to one another.

6. The device according any of the preceding claims, wherein a plurality of read/write heads (34, 36, 38, 40) are arranged on a common carriage (28, 32) in positions spaced apart in transport direction, and the carriage is adapted to be driven such that the read/write heads (34, 36, 38, 40) move synchronously with the chips (14).

7. The device according to claim 6, wherein the spacings of the read/write heads (34, 36, 38, 40) on the carriage (28,30) are adjustable.

## Revendications

1. Dispositif pour la personnalisation de puces RFID (14) pour des étiquettes (16), qui doivent être apposées sur des objets à identifier, avec une tête de lecture/écriture (34, 36, 38, 40), qui est conçu pour communiquer sans fil avec une puce lorsqu'il se trouve à proximité de cette puce (14), dans lequel un dispositif de transport (12) est conçu pour transport les puces (16) successivement et de manière continue à travers une station de personnalisation (10 ; 10', 10") et la tête de lecture/écriture (34, 36, 38, 40) est disposée de manière mobile dans la station de personnalisation et peut être entraînée de sorte que, pendant la communication avec une puce, elle se déplace de manière synchrone sur une trajectoire déterminée avec une puce, **caractérisé en ce que** la station de personnalisation comprend au moins deux sections (22, 24) qui comprennent chacune au moins une tête de lecture/écriture (34, 36, 38, 40) et qui sont traversées successivement par les puces (14) et **en ce qu'**un dispositif de commande est conçu pour contrôler le mouvement des têtes de lecture/écriture, de sorte que, à la suite des puces (14), deux puces, qui ont été personnalisées dans une section, sont séparées par des intervalles et les puces dans ces intervalles sont personnalisées dans une autre section.

2. Dispositif selon la revendication 1, dans lequel le dispositif de transport (12) comprend une bande porteuse (18) sur laquelle les puces (14) sont disposées successivement, ainsi que de rouleaux de déviation (20) par l'intermédiaire desquels la bande porteuse (18) est guidée par la station de personnalisation (10 ; 10', 10").

3. Dispositif selon la revendication 1 ou 2, avec un entraînement linéaire (32) qui entraîne la tête de lecture/écriture (34, 36, 38, 40) dans un mouvement linéaire oscillant.

4. Dispositif selon la revendication 1 ou 2, la tête de lecture/écriture (34, 36, 38, 40) peut être entraînée dans un mouvement circulation le long d'une trajectoire qui s'étend au moins à certains endroits parallèlement à la trajectoire de déplacement des puces (14).

5. Dispositif selon l'une des revendications précédentes, dans lequel les trajectoires de transport des puces dans deux sections (22, 44) successives sont en ligne droite et parallèles entre elles et les directions de transport dans ces sections sont opposées entre elles.

6. Dispositif selon l'une des revendications précédentes, dans lequel plusieurs têtes de lecture/écriture (34, 36, 38, 40) sont disposées sur un chariot commun (28, 32) dans la direction de transport à une distance entre elles et le chariot peut être entraîné de sorte que les têtes de lecture/écriture (34, 36, 38, 40) se déplacent de manière synchrone avec les puces (14).

7. Dispositif selon la revendication 6, dans lequel les distances entre les têtes de lecture/écriture (34, 36, 38, 40) sur le chariot (28, 30) peuvent être ajustées.
